(19) **Europäisches Patentamt**

**European Patent Office**

**Office européen des brevets**

(11) **EP 1 179 935 B1**

(12) **EUROPEAN PATENT SPECIFICATION**

(45) Date of publication and mention
of the grant of the patent:
**28.12.2005 Bulletin 2005/52**

(51) Int Cl.⁷: $H04L\ 25/03$, $H04L\ 1/00$

(21) Application number: **00402273.7**

(22) Date of filing: **11.08.2000**

(54) **Channel delay spread adaptive equalization and decoding**

Adaptive Entzerrung und Dekodierung für gespreizte Kanalverzögerung

Egalisation adaptative et décodeur pour un canal de retard étalé

(84) Designated Contracting States:
**AT BE CH CY DE DK ES FI FR GB GR IE IT LI LU MC NL PT SE**

(43) Date of publication of application:
**13.02.2002 Bulletin 2002/07**

(73) Proprietor: **Mitsubishi Electric Information Technology Centre Europe B.V.
1119 NS Schiphol Rijk (NL)**

(72) Inventor: **Penther, Bertrand
35700 Rennes (FR)**

(74) Representative: **Maillet, Alain
SCP Le Guen & Maillet,
5, Place Newquay,
B.P. 70250
35802 Dinard Cedex (FR)**

(56) References cited:
- **RAPHAELI D ET AL: "COMBINED TURBO EQUALIZATION AND TURBO DECODING" PHOENIX, ARIZONA, NOV. 3 - 8, 1997, NEW YORK, IEEE, US, 3 November 1997 (1997-11-03), pages 639-643, XP000737617 ISBN: 0-7803-4199-6**
- **REINHARDT M ET AL: "TURBO-EQUALISATION FOR SYMBOL-SPREAD BLOCK TRANSMISSION SYSTEM" ELECTRONICS LETTERS, GB, IEE STEVENAGE, vol. 32, no. 25, 5 December 1996 (1996-12-05), pages 2321-2323, XP000685319 ISSN: 0013-5194**
- **DOUILLARD C ET AL: "ITERATIVE CORRECTION OF INTERSYMBOL INTERFERENCE: TURBO-EQUALIZATION" EUROPEAN TRANSACTIONS ON TELECOMMUNICATIONS AND RELATED TECHNOLOGIES, IT, AEI, MILANO, vol. 6, no. 5, 1 September 1995 (1995-09-01), pages 507-511, XP002055352 ISSN: 1120-3862**

**Description**

The present invention concerns a method for equalizing symbols received from a transmission channel and decoding data therefrom. The invention more specifically concerns an equalization and decoding method which is adaptive to the delay spread of the transmission channel.

Equalization is a well known method for removing Inter Symbol Interference (ISI) affecting a transmission channel.

The signal samples at the channel output can be expressed as:

$$R_k = \sum_{i=0}^{L-1} c_i D_{k-i} + \eta_k \qquad (1)$$

where $c_i$ are the channel coefficients defining the impulse response of the transmission channel (CIR), $L$ is the delay spread of the channel, $D_{k-i}$ is a $M$-ary modulated symbol and $\eta_k$ is the sampled additive white Gaussian (AWG) noise affecting the channel. From equation (1) the transmission channel can be viewed as a finite impulse response filter with L taps.

A first class of equalization methods is concerned with symbol-by-symbol equalization. A simple equalization method consists in using a transverse linear filter for cancelling the ISI. Of course, the tap coefficients of the transversal filter can be adapted to track the variations of the channel characteristics. However, linear equalization performs poorly due to the effect of noise enhancement. This effect is mitigated in nonlinear Decision Feedback Equalization (DFE). A decision feedback equalizer comprises two parts: a feedforward part identical to a transverse linear filter and a feedback part including a decision step on the received symbol. The feedback part estimates the ISI contributed by the previously decided symbols and subtracts this estimation from the transverse linear filter output before the decision on the current symbol is made.

A second class of equalization methods derives from a Maximum Likelihood Sequence approach called therefore Maximum Likelihood Sequence Estimation (MLSE). According to this approach, the discrete memory channel is modelled as a finite-state machine, the internal register of which having the length of the channel memory. The most likely transmitted sequence $D_k$, knowing the received sequence $R_k$ and the channel coefficients, is obtained by the Viterbi algorithm. Since the number of states of the trellis involved in the Viterbi algorithm grows exponentially with the channel memory length, several proposals have been made to reduce the number of states to be taken into account. In a first attempt to mitigate this effect, DDFSE (Delayed Decision Feedback Sequence Estimation) combines MLSE and DFE techniques by truncating the channel memory to a reduced number of terms and by removing in the branch metrics the tail of the ISI using a decision made on the surviving sequence at an earlier step (tentative decision). A further improvement with respect to error propagation, called RSSE, (Reduced State Sequence Estimation) was inspired by an Ungerboeck-like set partitioning principle. The RSSE algorithm was originally disclosed in the article of V.M. Eyuboglu et al. entitled "Reduce-state sequence estimation with set partitioning and decision feedback", published in IEEE Trans. Commun., Vol. 36, pages 13-20, January 1988. Broadly speaking, in RSSE, the symbols are partitioned into subsets and Viterbi decoding is performed on a subset-trellis, a node or subset-state of the subset-trellis being a vector of subset labels (instead of a vector of symbols like in DDFSE). An advantage of RSSE over DDFSE is that it does not use tentative decisions but embeds the uncertainty of the channel response within the trellis structure.

Another possible way of relaxing the constraints in the decoding trellis is the list-type generalization of the Viterbi algorithm (GVA) proposed by T. Hashimoto in the article entitled "A list-type reduced-constraint generalization of the Viterbi algorithm" published in IEEE Trans. Inform. Theory, vol. IT-33, N°6, Nov. 1987, pages 866-876. The Viterbi algorithm is generalized in the sense that, for a given state in the trellis diagram, a predetermined number S of paths (survivors) leading to that state, instead of a single one in the conventional Viterbi algorithm, are retained at each step. The retained paths are then extended by one branch corresponding to the assumed received symbol and the extended paths are submitted to a selection procedure leaving again S survivors per state. The GVA was applied to equalisation by Hashimoto himself in the above mentioned paper and a list-type Viterbi equalizer and later developed by Kubo et al. the article entitled "A List-output Viterbi equalizer with two kind of metric criteria" published in Proc. IEEE International Conference on Universal Personnal Comm. '98, pages 1209-1213.

Both RSSE and LOVE (List Output Viterbi Equalization) can be regarded as particular cases of Per Survivor Processing (PSP) described in the article of R. Raheli et al. entitled "Per Survivor Processing" and published in Digital Signal Processing, N°3, July 1993, pages 175-187. PSP generally allows joint channel estimation and equalization by incorporating in the Viterbi algorithm a data aided estimation of the channel coefficients. This technique is particularly useful in mobile telecommunication for equalization of fast fading channels.

Recently, a new method of equalisation has been derived from the seminal principle of turbo-decoding discovered by C. Berrou, A. Glavieux, P. Thitimajshima, and set out in the article entitled "Near Shannon limit error-correcting coding and decoding: Turbo-coding", ICC '93, Vol. 2/3, May 1993, pages 1064-1071. This principle has been successfully applied to equalization by C. Douillard et al. as described in the article entitled "Iterative correction of Intersymbol Interference: Turbo-equalization" published in European Trans. Telecomm., Vol. 6, N° 5, Sept./Oct. 95, pages 507-511.

The basic principle underlying turbo-equalization is that an ISI channel can be regarded as a convolutional coder and therefore the concatenation of a coder, an interleaver and the transmission channel itself can be considered as equivalent to a turbo-coder.

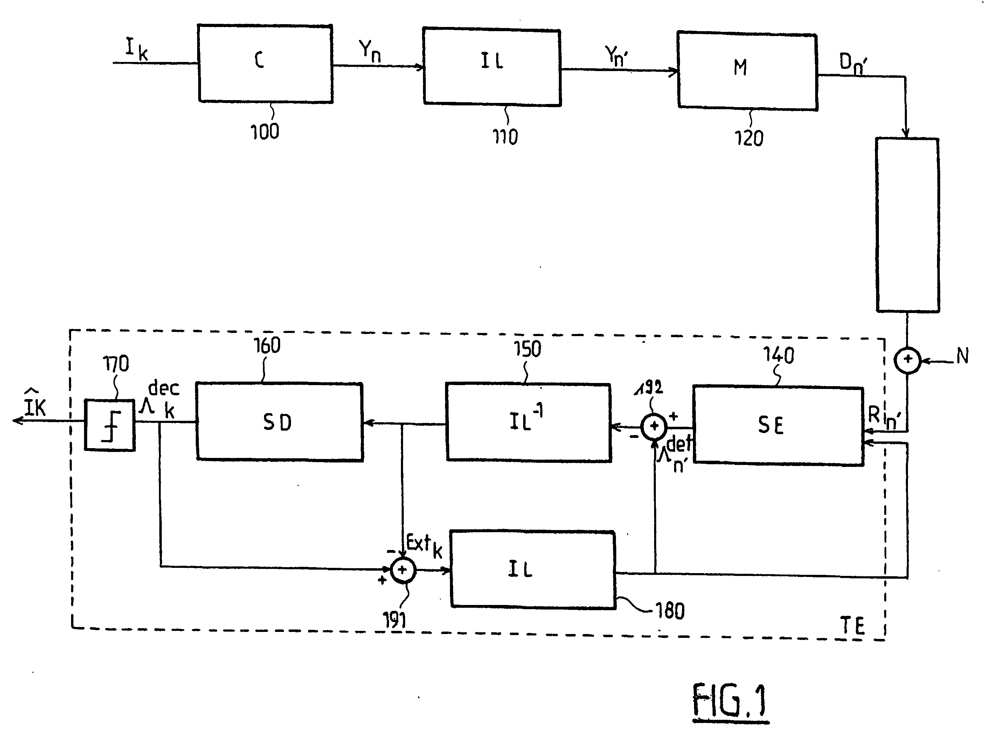

Turbo-equalization is based on an iterative joint equalization and channel decoding process. Fig. 1 shows an example of a transmission system using turbo-equalization. The transmitter comprises a systematic coder (100), e.g. a systematic convolutional coder (K,R) where K is constraint length and R is the binary rate, which encodes the input data $I_k$ into error-control coded data $Y_n$, an interleaver (110) outputting interleaved data $Y_n$, and a M-ary modulator (120), e.g. a BPSK modulator, or a QAM modulator. At the receiving side, the turbo-equalizer TE is represented with dotted lines. The symbols $R_n$, affected by ISI are supplied to a soft equalizer (140) which outputs soft values $\Lambda_n$, representing the reliability of the estimation of $Y_{n'}$. The soft equalization may be implemented by a Soft Output Viterbi Algorithm (SOVA) as described in the article of J. Hagenauer and P. Hoeher entitled "A Viterbi algorithm with soft-decision outputs and its applications" published in Proc. IEEE Globecom '89, pages 47.1.1-47.1.7. Alternately the Maximum A Posteriori (MAP) algorithm initially described in the article of L. Bahl, J. Cocke, F. Jelinek and J. Raviv published in IEEE on Information Theory, vol. IT-20, March 1974, pages 284-287 or a variant thereof (e.g. Log MAP, Max Log MAP) can be used. The latter algorithms will be globally referred to in the following as APP-type algorithms since they all provide the a posteriori probability for each bit to be decided. For example, the soft-equalizer of Fig. 1 implements the Log MAP algorithm which conveniently expresses the reliability information in the form of a Log Likelihood ratio $\Lambda_{n'}= \Lambda(Y_{n'})$. The soft values $\Lambda_{n'}$ are then de-interleaved by the deinterleaver (150) and supplied to a soft-output decoder which may be here again a SOVA decoder or an APP-type decoder. The soft decoder uses these soft values and the knowledge of the coding algorithm to form soft estimates $\Lambda_k=\Lambda(I_k)$ of the initial data $I_k$ which, in turn, permit to refine the estimation of the received symbols. For this, the latter estimates are passed back to the equalization stage. More precisely, the extrinsic information $Ext_k$ produced by the decoding stage, i.e. the contribution of that stage to the reliability of the estimation, is obtained by subtracting in (191) the soft-output from the soft-input of the decoder. The extrinsic information $Ext_k$ is then interleaved in interleaver (180) and fed back as a priori information to the soft equalizer (140). According to the principle of turbo-decoding, the extrinsic information derived from a stage must not be included in the soft input of the same stage. Hence, the extrinsic information $Ext_k$ is subtracted in (192) from the output of the soft equalizer. The iteration process repeats until the estimation converges or until a time limit is reached. The soft output of the decoder is then compared to a threshold (170) to provide a hard output, i.e. a decision $\hat{I}_k$ on the bit value.

The reduced state technique has been successfully transposed to the MAP algorithm with the view of applying it to turbo-equalization. In particular, a List MAP equalizer is described in French patent applications FR-2803457 and FR-2803458 filed by the Applicant on 4.1.2000 and 15.2.2000 respectively.

The idea of joint channel estimation and equalization has also pervaded turbo-equalization. L. Davis, I. Collings and P. Hoeher have proposed in an article entitled "Joint MAP equalization and channel estimation for frequency-selective fast fading channels" published in Proc. IEEE Globecom '98, pages 53-58, a turboequalizer comprising a MAP equalizer making use of an expanded state trellis. The expansion of the state trellis beyond the channel memory length introduces additional degrees of freedom which are used for estimating the channel parameters. This method is more particularly useful for channels exhibiting fast varying characteristics, for example in the case of a transmission channel involving a high velocity mobile terminal.

Another possible structure of turboequalizer is described in the article of A. Glavieux et al. entitled "Turbo-equalization over a frequency selective channel", International Symposium on Turbo-codes", Brest, Sept. 97. In place of the MAP equalizer illustrated in Fig. 1, the first stage of the turboequalizer comprises a transversal linear filter for cancelling ISI from the received symbols in a decision directed mode followed by a M-ary to binary soft decoder.

Whatever the structure of the turbo-equalizer is, a problem arises in mobile telecommunication when the delay spread in the transmission channel is low or when it operates at low diversity. In such instance, the so-called "turbo-effect", i.e. the improvement of the estimation reliability over successive iterations, is significantly reduced. This phenomenon, which means that the gain between two consecutive iterations of the iterative process decreases for a given signal to noise ratio $E_b/N_0$ (where $E_b$ is the mean energy received per information bit and $N_0$ the noise bilateral spectral density) can be explained by the fact that turbo-equalization performs better on codes exhibiting large constraint lengths and that the delay spread of a channel can be regarded to some extent as equivalent to the constraint length of a code.

The object of the present invention is to propose an equalizing method and device which solve the above addressed problem.

The problem is solved by carrying out the method steps (resp. by implementing the technical features) recited in the characterising part of claim 1 (resp. claim 18)

The invention will be better understood from a description of the various embodiments of the invention in relation to the following figures.

Fig. 1 schematically shows a known transmission system comprising a turbo-equalizer;
Fig. 2 schematically shows the structure of a receiver according to the invention;
Fig. 3 schematically shows the structure of a transmitter according to the invention;

The basic idea at the root of the invention is to switch from turbo-equalization to equalization and turbo-decoding when the delay spread of the transmission channel is too small for the turbo-equalization to perform efficiently. By delay spread, we understand a measure (e.g. a statistical measure) of the width of the power distribution of the channel impulse response. Conversely, when the delay spread is large enough, turbo-equalization is used. In other words, if the transmission channel provides enough "information redundance", a turbo-equalization is preferred while, in the opposite case, redundance is introduced at the coding stage and exploited by a turbo-decoder in the receiver. Roughly speaking, the invention can be regarded as a way of compensating for a small delay spread of the transmission channel.

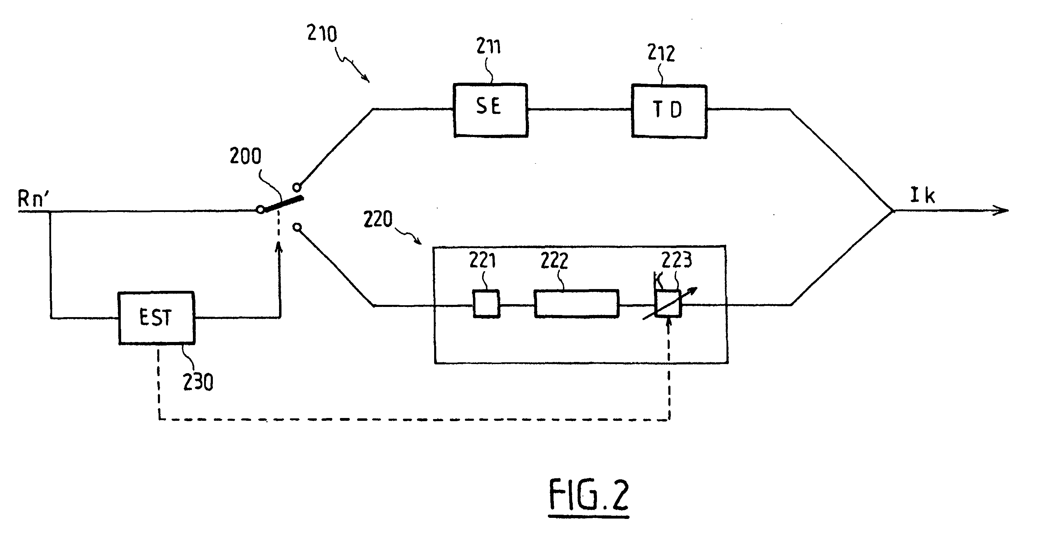

As shown in Fig. 2 a switch (200) supplies the received symbols either to a lower processing branch (220) or to an upper processing branch (210). The lower processing branch includes a turbo-equalizer whereas the upper branch comprises a soft-equalizer (211) followed by a turbo-decoder (212). The switch (200) is controlled by an estimator (230) which estimates the delay spread of the transmission channel and compare it with a predetermined threshold. If the delay spread lies above the threshold, the lower branch is selected and, conversely, if the delay spread lies under the threshold, the upper branch is selected. Advantageously, hysteresis is provided by employing two thresholds. When the delay spread rises above a first threshold, the lower branch is selected whereas when it falls under a second threshold the upper branch is selected. Alternately, a minimum time interval between consecutive transitions will be provided in order to avoid chattering.

The soft-equalizer used in the upper branch of the receiver may be an equalizer of the APP-type or a conventional equalizer followed by an M-ary to binary soft converter.

The soft-equalizer used within the turbo-equalizer may be of the APP type and preferably is a Log MAP equalizer. In a first embodiment, the number of states in the APP trellis is equal to $M^{L-1}$ where M is size of the modulation alphabet and L is the delay spread, i.e. the constraint length of the channel (the size of the channel memory is equal to L-1) expressed in a number of samples. For a large memory length however, a second embodiment using a reduced state technique is preferred. The number of states taken into account is then reduced to $M^{J-1}$ by truncating the constraint length to a strictly positive integer, J<L (the size of the channel memory is truncated to J-1). For example, a List-type APP equalizer as disclosed in the above mentioned patent applications can serve this purpose. In contrast, an expanded state trellis may be opted for in case of fast varying characteristics of the transmission channel. In such instance, the higher number of states in the trellis , $M^{J-1}$ where J>L enables a joint estimation of the channel coefficients and of the data.

Advantageously, the value of J will be varied with respect to the propagation conditions, in particular the shape (e.g. the power profile) of the channel response. For example, in the case of a mobile telecommunication channel, if the propagation involves a Line of Sight component, in other words if the channel is affected by Ricean dispersion, a reduced state trellis (J<L) could be used. On the other hand, if the velocity of the mobile terminal is higher than a given threshold and, hence, the channel suffers from fast-fading, an expanded state trellis (J>L) could be chosen.

Preferably, the value of the constraint length K will be varied in accordance with L (and more generally with J). In this embodiment the soft decoder (223) (and the associated coder at the transmitter side as will be shown below) is reconfigurable to accommodate to different values of K and hence different trellis sizes. K is increased when L decreases whereas K is decreased when L increases, along the same compensation principle set out above.

Preferably, all the steps of turbo-equalisation will be performed by a single digital programmable device like a digital signal processor and the turbo-equalization process will be optimized under a complexity constrain as described in copending European patent application entitled "Resource constrained turbo-equalization" filed by the Applicant. The complexity of the soft equalizer (221), the deinterleaver (222) and the soft decoder (223) are then bound by a maximum complexity value. Since the complexity of the deinterleaver does not need to be varied when K or J varies, the complexity constraint can be expressed as:

$a.2^{K-1}+b.M^{J-1}<C_{max}$ (2) when the soft equalizer (221) is a MAP equalizer and

$a.2^{K-1}+b'.L<C_{max}$ (3) when the soft equalizer (221) is based on a transversal linear filter with L taps. The term $2^{K-1}$ accounts for the complexity of the MAP decoder, the term $M^{J-1}$ accounts for the complexity of the MAP equalizer and a,b,b' are fixed coefficients. Preferably, for a given L or J, K is chosen as the highest possible integer meeting the constraint (2) or (3).

According to a further embodiment, the number N of iterations of the turbo-equalization process is made variable. The BER gain achieved by turbo-equalization increases with the number N of iterations. Hence, it may be desirable to increase N while the constraint on an available resource (e.g. the processing power of the DSP) is met. In general, the amount of processing power required by turbo-equalization increases linearly versus N (in some instances, however, the DSP may benefit from parallel computation and the increase versus N may be less than linear) and the constraints (2) and (3) have to be replaced by (2') and (3') respectively:

$$N.(a.2^{K-1}+b.M^{J-1})<C_{max} \qquad (2')$$

$$N.(a.2^{K-1}+b'.L)<C_{max} \qquad (3')$$

In both cases, at least one of K and N is chosen to meet the resource constraint (2') or (3').

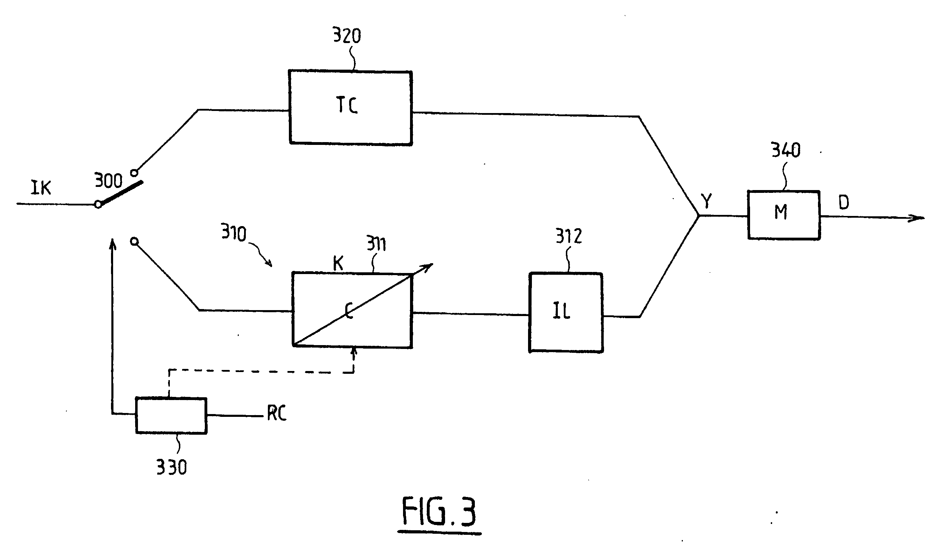

Fig. 3 schematically shows the structure of a transmitter for use with the receiver of Fig. 2

The transmitter comprises a switch (300) directing the data $I_k$ to be coded either to a turbocoder (320) or to a systematic coder (311) in series with an interleaver (312). The upper branch and the lower branch outputs are both connected to the input of the modulator (340). If the receiver operates in a pure switching mode, it sends a switch position signal to the transmitter over a reverse channel RC (e.g. the dedicated physical control channel (DPCCH) in a mobile telecommunication system). This signal is received by the controller (330) which controls the switch accordingly.

Advantageously, the constraint length K of the coder can be made variable. When the receiver decides to modify the value of the constraint length K upon a change of L (or J), it sends a request back to the transmitter for increasing or decreasing K. The request is transmitted over the reverse channel and received by the controller (330). The controller increments or decrements K accordingly and updates the constraint value of the coder.

In addition, the controller may control the transmission power of the transmitter. Indeed, an increase of K results in a lower BER. Hence, it is possible to lower the signal to noise ratio at the receiving side while keeping an acceptable BER target level. This measure is particularly prescribed for lowering the interference level in a cellular telecommunication system.

Although parts of the description describe the method according to the invention in terms of processing blocks (e.g. an encoder, an interleaver, a modulator etc.), it should be clear for the man skilled in the art that these blocks are represented as a matter of convenience only and that some or all the processing steps can be carried out by a single or a plurality of digital data processors.

**Claims**

1.    Method for equalizing symbols received from a transmission channel and for decoding data therefrom, **characterised in that** the method performs either a first processing (220) comprising a turboequalizing sequence on the received symbols or a second processing (210) comprising an equalizing step followed by a turbodecoding sequence (211), the selection of the first or the second processing being made upon an estimation (230) of the delay spread of the transmission channel.

2.    Method as claimed in claim 1, **characterised in that** the first processing is chosen when the value of the delay spread of the transmission channel is high and the second processing is chosen when said the value of the delay spread is low.

3.    Method as claimed in claim 2, **characterised in that** the first processing is selected when the value of said delay spread rises above a first threshold and the second processing is selected when the value of the delay spread falls under a second threshold.

4.    Method as claimed in claims 1, 2 or 3, **characterised in that** the turboequalizing sequence includes the iteration of a soft equalizing step according to an APP type algorithm, a deinterleaving step and a soft decoding step.

5.    Method as claimed in claim 4, **characterised in that** the APP type algorithm is a List-type APP algorithm.

6.    Method as claimed in claims 4 or 5, **characterised in that** the number of states of the APP trellis is equal to $M^{J-1}$ where M is the modulation alphabet size used over the transmission channel and J is a strictly positive integer which is chosen according to a characteristic of the transmission channel.

7. Method as claimed in claim 6, **characterised in that** J is chosen higher than the value of said delay spread if the transmission channel is affected by fast fading.

8. Method as claimed in claim 6, **characterised in that** J is chosen lower than the value of said delay spread if the propagation involves a Line of Sight component.

9. Method as claimed in claims 6, **characterised in that** J is chosen according to the power profile of the channel impulse response.

10. Method as claimed in claims 7,8 or 9, **characterised in that** said soft decoding step is based upon an APP type algorithm involving $2^{K-1}$ states, K being increased when J decreases and K being decreased when J increases.

11. Method as claimed in claims 7,8,9 or 10, **characterised in that** K is determined as the highest integer for which $a.2^{K-1} + b.M^{J-1}$, where a and b are fixed coefficients, is lower than a predetermined resource value.

12. Method as claimed in claims 7,8,9 or 10, **characterised in that** at least one of K and N, the number of iterations of the turbo-equalizing sequence is adapted so that $N.(a.2^{K-1} + b.M^{J-1})$, where a and b are fixed coefficients, is lower than a predetermined resource value.

13. Method as claimed in claims 1, 2 or 3, **characterised in that** the turboequalizing sequence includes the iteration of a soft equalizing step including a filtering step for cancelling the intersymbol interference over the transmission channel, the filter having L taps where L is a variable parameter given by the delay spread of the transmission channel, a deinterleaving step and a soft decoding step.

14. Method as claimed in claim 13, **characterised in that** said soft decoding step is based upon an APP type algorithm involving $2^{K-1}$ states where K is chosen as the highest integer for which $a.2^{K-1} + b'.L$ , where a and b' are fixed coefficients, is lower than a predetermined resource value.

15. Method as claimed in claim 13, **characterised in that** at least one of K and N, the number of iterations of the turbo-equalizing sequence, is adapted so that $N.(a.2^{K-1} + b'.L)$, where a and b' are fixed coefficients, is lower than a predetermined resource value.

16. Method for coding data, **characterised in that** the method performs either a first processing comprising a coding step (311) followed by an interleaving step (312) or a second processing including a turbocoding step (320) for turbocoding said data, the choice (300) of the selection of the first or the second processing being made upon an information over the delay spread of the transmission channel.

17. Method for coding data as claimed in claim 16, **characterised in that** the coding step uses a convolutional code having a variable constraint length.

18. Receiver comprising processing means (200,210,220) for carrying out all the method steps claimed in any of claims 1 to 15.

19. Transmitter comprising processing means (300,310,320) for carrying out all the method steps claimed in claim 16 or 17.

20. Telecommunication system comprising a transmitter as claimed in claim 19 and a receiver as claimed in claim 18, the receiver sending back to the transmitter the information (Rc) relative to the delay spread of the transmission channel.

21. Telecommunication system as claimed in claim 20, **characterised in that** the transmitter comprises a convolutional coder whose constraint length is increased or decreased upon a request from the receiver.

**Patentansprüche**

1. Verfahren zum Entzerren von Symbolen, die von einem Übertragungskanal empfangen sind, und zum Decodieren von Daten daraus, **dadurch gekennzeichnet, dass** das Verfahren entweder eine erste Verarbeitung (220) mit einer Turbo-Entzerrungssequenz an den empfangenen Symbolen oder eine zweite Verarbeitung (210) mit einem Entzerrungsschritt, dem eine Turbo-Decodiersequenz (211) folgt, durchführt, wobei die Auswahl der ersten oder der zweiten Verarbeitung auf eine Schätzung (230) der Verzögerungsausbreitung des Übertragungskanals hin durchgeführt wird.

2. Verfahren nach Anspruch 1, **dadurch gekennzeichnet, dass** die erste Verarbeitung ausgewählt wird, wenn der Wert der Verzögerungsausbreitung des Übertragungskanals hoch ist, und die zweite Verarbeitung ausgewählt wird, wenn der Wert der Verzögerungsausbreitung niedrig ist.

3. Verfahren nach Anspruch 2, **dadurch gekennzeichnet, dass** die erste Verarbeitung ausgewählt wird, wenn der Wert der Verzögerungsausbreitung über eine erste Schwelle ansteigt, und die zweite Verarbeitung ausgewählt wird, wenn der Wert der Verzögerungsausbreitung unter eine zweite Schwelle abfällt.

4. Verfahren nach Anspruch 1, 2 oder 3, **dadurch gekennzeichnet, dass** die Turbo-Entzerrungssequenz die Iteration eines Weich-Entzerrungsschritts gemäß einem Algorithmus vom APP-Typ, eines Entschachtelungsschritts und eines Weich-Decodierschritts enthält.

5. Verfahren nach Anspruch 4, **dadurch gekennzeichnet, dass** der Algorithmus vom APP-Typ ein APP-Algorithmus vom Listentyp ist.

6. Verfahren nach Anspruch 4 oder 5, **dadurch gekennzeichnet, dass** die Anzahl von Zuständen des APP-Trellis gleich $M^{J-1}$ ist, wobei M die Modulationsalphabetgröße ist, die über dem Übertragungskanal verwendet wird, und J eine streng positive ganze Zahl ist, die gemäß einer Charakteristik des Übertragungskanals ausgewählt wird.

7. Verfahren nach Anspruch 6, **dadurch gekennzeichnet, dass** J derart ausgewählt wird, dass es größer als der Wert der Verzögerungsausbreitung ist, wenn der Übertragungskanal durch einen schnellen Schwund bzw. ein schnelles Fading beeinträchtigt ist.

8. Verfahren nach Anspruch 6, **dadurch gekennzeichnet, dass** J derart ausgewählt wird, dass es kleiner als der Wert der Verzögerungsausbreitung ist, wenn die Ausbreitung eine Sichtlinienkomponente enthält.

9. Verfahren nach Anspruch 6, **dadurch gekennzeichnet, dass** J gemäß dem Leistungsprofil der Kanal-Impulsantwort ausgewählt wird.

10. Verfahren nach Anspruch 7, 8 oder 9, **dadurch gekennzeichnet, dass** der Weich-Decodierschritt auf einem Algorithmus vom APP-Typ basiert, der $2^{K-1}$ Zustände enthält, wobei K erhöht wird, wenn J kleiner wird, und K erniedrigt wird, wenn J größer wird.

11. Verfahren nach Anspruch 7, 8, 9 oder 10, **dadurch gekennzeichnet, dass** K als die größte ganze Zahl bestimmt wird, für welche $a.2^{K-1} + b.M^{J-1}$, wobei a und b feste Koeffizienten sind, kleiner als ein vorbestimmter Betriebsmittelwert ist.

12. Verfahren nach Anspruch 7, 8, 9 oder 10, **dadurch gekennzeichnet, dass** wenigstens eines von K und N, die Anzahl von Iterationen der Turbo-Entzerrungssequenz, so angepasst ist, dass $N.(a.2^{K-1} + b.M^{J-1})$, wobei a und b feste Koeffizienten sind, kleiner als ein vorbestimmter Betriebsmittelwert ist.

13. Verfahren nach Anspruch 1, 2 oder 3, **dadurch gekennzeichnet, dass** die Turbo-Entzerrungssequenz die Iteration eines Weich-Entzerrungsschritts einschließlich eines Filterschritts zum Auslöschen der Zwischensymbolinterferenz über dem Übertragungskanal, wobei das Filter L Abgriffe hat, wobei L ein variabler Parameter ist, der durch die Verzögerungsausbreitung des Übertragungskanals zugeteilt ist, eines Entschachtelungsschritts und eines Weich-Decodierschritts enthält.

14. Verfahren nach Anspruch 13, **dadurch gekennzeichnet, dass** der Weich-Decodierschritt auf einem Algorithmus vom APP-Typ basiert, der $2^{K-1}$ Zustände enthält, wobei K als die größte ganze Zahl ausgewählt wird, für welche a.2$^{K-1}$ + b'.L, wobei a und b' feste Koeffizienten sind, kleiner als ein vorbestimmter Betriebsmittelwert ist.

15. Verfahren nach Anspruch 13, **dadurch gekennzeichnet, dass** wenigstens eines von K und N, die Anzahl von Iterationen der Turbo-Entzerrungssequenz, so angepasst ist, dass N.(a.2$^{K-1}$ + b'.L), wobei a und b' feste Koeffizienten sind, kleiner als ein vorbestimmter Betriebsmittelwert ist.

16. Verfahren zum Codieren von Daten, **dadurch gekennzeichnet, dass** das Verfahren entweder eine erste Verarbeitung mit einem Codierschritt (311), dem ein Verschachtelungsschritt (312) folgt, oder eine zweite Verarbeitung mit einem Turbo-Codierschritt (320) für eine Turbo-Codierung der Daten durchführt, wobei die Auswahl (300) der Auswahl der ersten oder der zweiten Verarbeitung auf eine Information über die Verzögerungsausbreitung des Übertragungskanals hin durchgeführt wird.

17. Verfahren zum Codieren von Daten nach Anspruch 16, **dadurch gekennzeichnet, dass** der Codierschritt einen Schaltungscode mit einer variablen Beschränkungslänge verwendet.

18. Empfänger mit einer Verarbeitungseinrichtung (200, 210, 220) zum Ausführen von allen Verfahrensschritten, die in einem der Ansprüche 1 bis 15 beansprucht sind.

19. Sender mit einer Verarbeitungseinrichtung (300, 310, 320) zum Ausführen von allen Verfahrensschritten, die im Anspruch 16 oder 17 beansprucht sind.

20. Telekommunikationssystem mit einem Sender nach Anspruch 19 und einem Empfänger nach Anspruch 18, wobei der Empfänger die Information (RC) relativ zu der Verzögerungsausbreitung des Übertragungskanals zurück zu dem Sender sendet.

21. Telekommunikationssystem nach Anspruch 20, **dadurch gekennzeichnet, dass** der Sender einen Schaltungscodierer aufweist, dessen Beschränkungslänge auf eine Anforderung von dem Empfänger hin erhöht oder erniedrigt wird.

**Revendications**

1. Procédé pour l'égalisation de symboles reçus provenant d'un canal de transmission et pour le décodage de leur données, **caractérisé en ce que** le procédé effectue soit un premier traitement (220) comprenant une séquence de turbo-égalisation sur les symboles reçus soit un deuxième traitement (210) comprenant une étape d'égalisation suivie d'une séquence de turbo-décodage (211), la sélection du premier ou du deuxième traitement étant faite lors d'une estimation (230) de la dispersion du retard du canal de transmission.

2. Procédé selon la revendication 1, **caractérisé en ce que** le premier traitement est choisi lorsque la valeur de la dispersion du retard du canal de transmission est élevée et le deuxième traitement est choisi lorsque ladite valeur de la dispersion du retard est faible.

3. Procédé selon la revendication 2, **caractérisé en ce que** le premier traitement est sélectionné lorsque la valeur de ladite dispersion du retard dépasse un premier seuil et le deuxième traitement est sélectionné lorsque la valeur de la dispersion du retard passe sous un deuxième seuil.

4. Procédé selon la revendication 1, 2 ou 3, **caractérisé en ce que** la séquence de turbo-égalisation comprend l'itération d'une étape d'égalisation molle selon un algorithme de type APP, d'une étape de désentrelacement et d'une étape de décodage mou.

5. Procédé selon la revendication 4, **caractérisé en ce que** l'algorithme de type APP est un algorithme APP de type liste.

6. Procédé selon la revendication 4 ou 5, **caractérisé en ce que** le nombre d'états du treillis APP est égal à M$^{J-1}$ où M est la taille de l'alphabet de modulation sur le canal de transmission et J est un nombre entier strictement positif qui est choisi selon une caractéristique du canal de transmission.

7. Procédé selon la revendication 6, **caractérisé en ce que** J est choisi supérieur à la valeur de ladite dispersion du retard si le canal de transmission est affecté d'un évanouissement rapide.

8. Procédé selon la revendication 6, **caractérisé en ce que** J est choisi inférieur à la valeur de ladite dispersion du retard si la propagation implique une composante de visibilité directe.

9. Procédé selon la revendication 6, **caractérisé en ce que** J est choisi en fonction du profil de puissance de la réponse impulsionnelle du canal.

10. Procédé selon la revendication 7, 8 ou 9, **caractérisé en ce que** ladite étape de décodage mou est fondée sur un algorithme de type APP exigeant $2^{K-1}$ états, K étant augmenté lorsque J diminue et K étant diminué lorsque J augmente.

11. Procédé selon la revendication 7, 8, 9 ou 10, **caractérisé en ce que** K est déterminé comme le nombre entier le plus grand pour lequel $a.2^{K-1} + b.M^{J-1}$, où a et b sont des coefficients constants, est inférieur à une valeur ressource prédéterminée.

12. Procédé selon la revendication 7, 8, 9 ou 10, **caractérisé en ce qu'**au moins un parmi K et N, le nombre d'itérations de la séquence de turbo-égalisation, est adapté de sorte que $N.(a.2^{K-1} + b.M^{J-1})$, où a et b sont des coefficients constants, soit inférieur à une valeur ressource prédéterminée.

13. Procédé selon la revendication 1, 2 ou 3, **caractérisé en ce que** la séquence de turbo-égalisation comprend l'itération d'une étape d'égalisation molle comprenant une étape de filtrage pour annuler le brouillage intersymbole sur le canal de transmission, le filtre ayant L branchements où L est un paramètre variable donné par la dispersion du retard du canal de transmission, d'une étape de désentrelacement et d'une étape de décodage mou.

14. Procédé selon la revendication 13, **caractérisé en ce que** ladite étape de décodage mou est fondée sur un algorithme de type APP impliquant $2^{K-1}$ états où K est choisi comme le nombre entier le plus haut pour lequel $a.2^{K-1} + b'.L$, où a et b' sont des coefficients constants, est inférieur à une valeur ressource prédéterminée.

15. Procédé selon la revendication 13, **caractérisé en ce qu'**au moins un parmi K et N, le nombre d'itérations de la séquence de turbo-égalisation, est adapté de sorte que $N.(a.2^{K-1} + b'.M^{J-1})$, où a et b' sont des coefficients constants, soit inférieur à une valeur ressource prédéterminée.

16. Procédé pour le codage de données, **caractérisé en ce que** le procédé effectue soit un premier traitement comprenant une étape de codage (311) suivie d'une étape d'entrelacement (312) soit un deuxième traitement comprenant une étape de turbocodage (320) pour le turbocodage desdites données, le choix (300) de la sélection du premier ou du deuxième traitement étant fait sur une information sur la dispersion du retard du canal de transmission.

17. Procédé pour le codage de données selon la revendication 16, **caractérisé en ce que** l'étape de codage utilise un code convolutionnel ayant une longueur de contrainte variable.

18. Récepteur comprenant des moyens de traitement (200, 210, 220) pour réaliser toutes les étapes du procédé revendiqué dans l'une quelconque des revendications 1 à 15.

19. Emetteur comprenant des moyens de traitement (300, 310, 320) pour effectuer toutes les étapes du procédé revendiqué dans les revendications 16 ou 17.

20. Système de télécommunication comprenant un émetteur selon la revendication 19 et un récepteur selon la revendication 18, le récepteur renvoyant à l'émetteur l'information (RC) relative à la dispersion du retard du canal de transmission.

21. Système de télécommunication selon la revendication 20, **caractérisé en ce que** l'émetteur comprend un codeur convolutionnel dont la longueur de contrainte est augmentée ou diminuée sur requête émanant du récepteur.

FIG.1

FIG.2

EP 1 179 935 B1

FIG.3